# EUROPEAN PATENT SPECIFICATION

(11) **EP 4 560 743 B1**
(45) Date of publication and mention of the grant of the patent: **14.01.2026**
(21) Application number: 23211077.5
(22) Date of filing: 21.11.2023
(51) Int. Cl.: H01M 8/04186, H01M 8/04537, H01M 8/04858, H01M 8/18, H01M 10/54

(54) **METHOD FOR OPERATING AN IRON SALT BATTERY**
VERFAHREN ZUM BETREIBEN EINER EISENSALZBATTERIE
PROCÉDÉ DE FONCTIONNEMENT D'UNE BATTERIE AU SEL DE FER

(43) Date of publication of application: 28.05.2025
(73) Proprietor: VoltStorage GmbH, 80935 München (DE)
(72) Inventor: Alper, John, 80797 München (DE)
(74) Representative: Grünecker Patent- und Rechtsanwälte PartG mbB

(56) References cited:
- WO-A1-2018/152256
- WO-A1-2018/201070
- WO-A1-2018/201093
- WO-A1-2020/106549

## Description

### Field of the Invention

The invention relates to a method for operating an iron salt battery.

### Prior Art

Different redox flow batteries are known in the art. A particular type is the iron salt battery which has the advantage of being cost efficient due to using only iron in different oxidation states as the electrolyte. It comprises two tanks, which in the uncharged state store electrolytes of dissolved Fe(II) ions. The electrolyte is pumped into the battery cell which includes two separated half-cells. The base electrolyte comprises Fe(II) salts which are dissolved in water, where Cl⁻ ions may be used as counter ions. Fe(II) chloride is preferred since the conductivity thereof is high.

Electrolyte for the positive tank is pumped through the positive half-cell, and electrolyte for the negative tank is pumped through the negative half-cell. The electrochemical reaction takes place at the electrodes within each half-cell. The half-cells are separated by a separator. This can be an anionic exchange membrane, a cationic exchange membrane or a porous separator.

The energy storage is based on the electrochemical reaction of iron. During charge, Fe(II) oxidizes to Fe(III) in the positive half-cell while in the negative half-cell Fe(II) is reduced to Fe(0). The latter reaction in the negative half-cell is also called the plating reaction, as Fe(0) is deposited on the negative electrode. During discharge, the plated Fe(0) is dissolved into the electrolyte forming Fe(II), while Fe(III) reduces to Fe(II) in the positive half-cell.

During the reaction, the charge within the electrolyte is balanced by migration of charged species through the separator. A crossover of Fe(III) from the positive to the negative half-cell may lead to coulombic efficiency loss, since it will react with the Fe(0) on the negative side. Coulombic efficiency describes the charge efficiency by which electrons are transferred in batteries. Coulombic efficiency is the ratio of the total charge extracted from the battery to the total charge put into the battery over a full cycle.

The single cells can be stacked and electrically connected in series via bipolar plates, forming a battery stack.

However, during normal operation of the battery, some metallic (solid) iron, Fe(0) formed during the charging process can get dislodged from the electrode in the negative half-cell, and clog or constrict the internal flow channels within the cell or stack of cells. As well, some Fe(0) formed during the charging process may remain in the stack due to uneven plating through the stack as a result of shunt currents (e.g., parasitic currents through the electrolyte channels).

Document WO 2018/201093 A1 discloses a method of cleansing a redox flow battery system may include operating the redox flow battery system in a charge, discharge, or idle mode, and responsive to a redox flow battery capacity being less than a threshold battery capacity, mixing the positive electrolyte with the negative electrolyte. Fe(OH)₃ precipitate may be removed by washing the battery with acid. Furthermore, washing may be dependent on regular preparation of electrolyte, adding to process cost and complexity. Adding specific organic acids to the positive electrolyte and the negative electrolyte in response to electrolyte pH changes may also mitigate precipitate formation during battery charge and discharge cycling.

Document WO 2018/201070 A1 discloses a multi-chambered electrolyte storage tank for a redox flow battery system.

### Description of the Invention

It is the object of the present invention to overcome or alleviate the above mentioned disadvantage.

This object is achieved by the method according to independent claim 1.

Claim 1 provides a method for operating an iron salt battery, ISB, device, the ISB device comprising an ISB cell or a stack of ISB cells, a positive tank containing a positive electrolyte, in particular positive iron dichloride and iron trichloride electrolyte, and a negative tank containing negative electrolyte, in particular negative iron dichloride electrolyte, wherein each ISB cell comprises a positive and a negative half-cell, the method comprising: determining a pressure drop across the ISB cell or stack of ISB cells and/or determining a number n of complete charging/discharging cycles of the ISB device performed since start of counting the number of cycles and/or determining a coulombic efficiency over a plurality of cycles; and if it is determined that the pressure drop is outside of a predefined range and/or the number n of complete charging/discharging cycles is above a preset threshold number N and/or the coulombic efficiency of a present cycle has dropped by more than a predefined percentage below the coulombic efficiency of a previous cycle, starting an iron residue removal operation mode to remove metallic solid iron residue from the ISB cell or the stack of ISB cells, wherein the iron residue removal operation mode comprises circulating positive electrolyte from the positive tank through the negative half-cell of each ISB cell or stack of ISB cells and back to the positive tank.

By circulating positive electrolyte through the negative half-cell, metallic iron can be removed from locations where such residue clogs or constrict internal flow channels within the ISB cell or ISB cell stack. Such metallic (solid) iron may have been dislodged from the negative electrode plated with Fe(0). As well, some Fe(0) formed during the charging process may remain in the stack due to uneven plating through the stack as a result of shunt currents (e.g., parasitic currents through the electrolyte channels). A larger than expected pressure drop across the ISB cell is an indication of clogged flow channels or residual iron. Alternatively, or in addition, the iron residue removal operation mode may be started after a predefined number N of cycles or if the coulombic efficiency has dropped when compared to previous cycles.

Claim 2 provides a method for operating an iron salt battery, ISB, device, the ISB device comprising an ISB cell or a stack of ISB cells, a positive tank containing a positive electrolyte, a negative tank containing negative electrolyte, and an acidification tank containing an acidic electrolyte, wherein each ISB cell comprises a positive and a negative half-cell, the method comprising: determining a pressure drop across the ISB cell or stack of ISB cells and/or determining a number n of complete charging/discharging cycles of the ISB device performed since start of counting the number of cycles and/or determining a coulombic efficiency over a plurality of cycles; and if it is determined that the pressure drop is outside of a predefined range and/or the number n of complete charging/discharging cycles is above a preset threshold number N and/or the coulombic efficiency of a present cycle has dropped by more than a predefined percentage below the coulombic efficiency of a previous cycle, starting an iron residue removal operation mode to remove metallic solid iron residue from the ISB cell or the stack of ISB cells; wherein the iron residue removal operation mode comprises circulating acidic electrolyte from the acidification tank through the negative half-cell of each ISB cell or stack of ISB cells and back to the acidification tank.

In this case, the ISB device further comprises an acidification tank with acidic electrolyte that is used for removing iron residue in the negative half-cell of each ISB cell or stack of ISB cells. The acidic electrolyte may optionally also comprise positive electrolyte previously transferred to the acidification tank.

Residual iron may be a result of iron being dislodged from the electrodes during charging or discharging, or as a result of uneven plating throughout the stack as a result of shunt currents (e.g., parasitic currents through the electrolyte channels). The step of circulating acidic or positive electrolyte through the negative half-cells avoids the need to short the stack.

Claim 1 can be developed in that the iron residue removal operation mode may only be started if the ISB device is discharged below a predefined percentage of full charge, in particular below 10%, more particularly below 1.0%. For claim 2 this is mandatory.

This has the advantage that iron residue removal operation mode takes place only on a significantly discharged battery, as the removal of iron metal in a charged state would mean the loss of the stored energy.

The step of determining if the ISB device is discharged below a predefined percentage of charge may include measuring an Fe(III) concentration in the positive tank. Specifically, the Fe(III) concentration is low in a significantly discharged battery as compared to a charged state of the battery. For example, when the Fe(III) concentration is below a predefined threshold, it may be determined that the ISB device is significantly discharged.

In a further development, the circulating positive electrolyte or acidic electrolyte, respectively, may etch and dissolve residual metallic iron from internal flow channels of the ISB cell or of the stack of ISB cells. In that way, the dissolved metallic iron can be transported outside of the ISB cell with the flowing positive electrolyte.

In another development, the circulating step may comprise circulating positive electrolyte from the positive tank or acidic electrolyte from the acidification tank, respectively, through the positive and negative half-cells of each ISB cell or stack of ISB cells and back to the positive tank, in particular first through the positive and then through the negative half-cell.

This has the advantage that also the positive half-cell is cleaned from residual iron that may have diffused through a separator between the half-cells or otherwise lodged in flow channels of the positive half-cell.

According to a further development, the method may comprise the further step of stopping any flow from the negative tank to the negative half cell(s) before starting the iron residue removal operation mode.

This avoids mixing of the positive and negative electrolyte.

According to another development, the step of determining a pressure drop across the ISB cell or stack may be performed by using at least two pressure measuring devices, one at a flow entrance side of the negative half cell(s) and another one at a flow exit side of the negative half cell(s) and/or one at a flow entrance side of the positive half cell(s) and another one at a flow exit side of the positive half cell(s). This provides for a suitable way of determining the pressure drop.

In a further development, the ISB device may further comprise processing circuitry that performs the determining step and operates the ISB device to perform the circulating step. Accordingly, the method may be computer-implemented.

This may be further developed in that operating the ISB device to perform the circulating step may comprise closing at least one valve for the negative electrolyte, opening at least one valve for the positive or acidic electrolyte, respectively, and pumping the positive or acidic electrolyte using at least one pump.

In another development, wherein reactions to remove metallic solid iron, *Fe⁰*, residue from the ISB cell or the stack of ISB cells include at least one of *Fe³⁺ + Fe*⁰ → 2*Fe*²⁺ and 2*H*⁺ + *Fe*⁰ → *Fe*²⁺ + *H₂.*

According to a further development, the method may comprise the further steps of determining if the pressure drop across the ISB cell or stack of ISB cells has returned to be within the predefined range; and if it is determined that the pressure drop has returned to be within the predefined range, stopping the circulation of positive or acidic electrolyte.

Accordingly, the positive or acidic electrolyte no longer passes through the negative half cell(s). This ends the iron residue removal operation mode.

This may further comprise, after stopping the circulation of positive or acidic electrolyte, the step of starting to perform an operation mode of charging the ISB device.

Accordingly, after the cleaning (removal of metallic iron) the pressure will return to a normal value within the predetermined range, and the ISB device can then be operated normally, specifically it can be charged.

According to another development, the positive electrolyte comprises positive iron dichloride and iron trichloride electrolyte, the negative electrolyte comprises negative iron dichloride electrolyte, and the acidic electrolyte comprises acidic iron dichloride electrolyte.

This particular type of the iron salt battery device is particularly suitable for being operated using the method according to the invention.

Further features and exemplary embodiments as well as advantages of the present invention will be explained in greater detail hereinafter with reference to the drawings. It is understood that the specific embodiments do not limit the present invention.

### Brief Description of the Drawings

- Fig. 1: shows a general layout of an iron salt battery.
- Fig. 2: illustrates a charging or discharging mode of operation of the ISB shown in Fig. 1.
- Fig. 3: illustrates an iron residue removal mode of operation of the ISB shown in Fig. 1.
- Fig. 4: illustrates another iron residue removal mode of operation of the ISB shown in Fig. 1.
- Fig. 5: shows a general layout of another iron salt battery.
- Fig. 6: illustrates an iron residue removal mode of operation of the ISB shown in Fig. 5.
- Fig. 7: illustrates another iron residue removal mode of operation of the ISB shown in Fig. 5.
- Fig. 8: illustrates still another iron residue removal mode of operation of the ISB shown in Fig. 5.

### Embodiments

The invention is described in detail for the following embodiments with respect to the accompanying drawings.

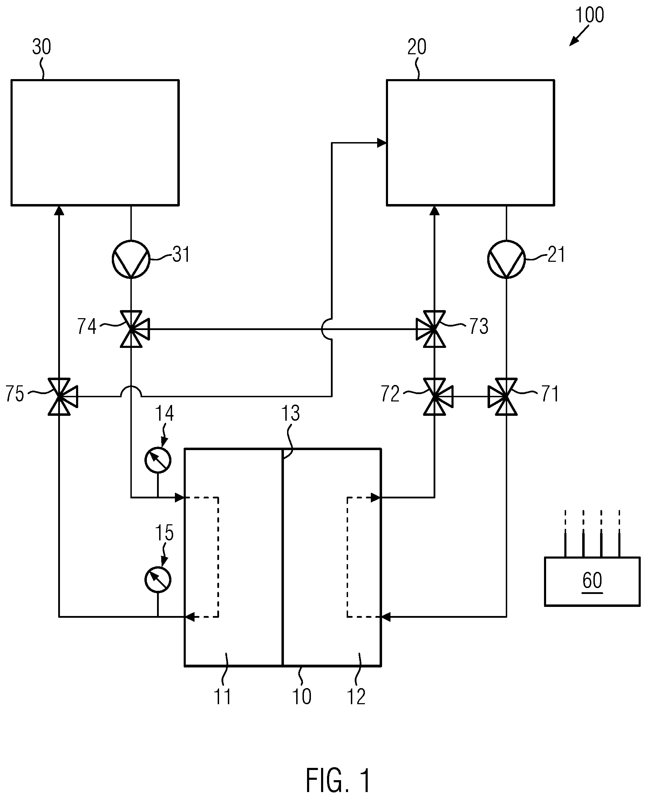

A basic schematic representation of an iron salt battery device (ISB device) 100 is depicted in Fig. 1.

The ISB device 100 comprises two separate tanks, a negative tank 30 containing a (liquid) negative electrolyte solution and a positive tank 20 containing a (liquid) positive electrolyte solution, whereas the volume of the positive electrolyte solution is a factor of 1.0-2.0 time that of the volume of the negative electrolyte solution. These two tanks are in direct fluidic connection to the ISB cell (or stack of ISB cells) 10 which comprises of a negative half-cell 11 where the half reaction (1)

(1) Fe²⁺ + 2e⁻ ←→ Fe⁰

takes place, and a positive half-cell 12 where the half reaction (2)

(2) Fe²⁺ ←→ Fe³⁺ + e⁻

takes place. The half-cells 11, 22 are in ionic and/or fluidic connection with each other through a (ion conductive) membrane or (porous) separator 13. Each half-cell also contains an electrically conductive electrode (not shown) at the opposite side in relation to the membrane/separator which have an opposing (electric) polarity in accordance to the designation of the respective half-cell polarity (positive or negative). These electrodes form the two electrical connection poles/terminals of this battery cell. Through these two electrodes, the cell is connected electrically to a circuit. In order to increase the voltage and/or power of this battery system, multiple cells can be stacked on top of each other, whereas the (monopolar) electrode of one half-cell will become also the electrode of the half-cell of the opposing polarity of the next adjoining cell. Every half-cell also incorporates flow channels having at least one fluidic inlet and at least one fluidic outlet, such that it is connected fluidically to the electrolyte tank of the same polarity (positive or negative).

In normal operations, the positive electrolyte solution is continuously pumped through the positive half-cell(s) 12 and the negative liquid electrolyte solution is continuously pumped through the negative half-cell(s) 11. Both electrolytes, in a discharged state, are identical and contain iron(II)-chloride in an aqueous solution. During the charging process (when a potential high enough is applied to both the electrodes to start the reaction), on the negative electrode, iron(II) is reduced to (elementary) iron(0) in a two-electron reaction (described in reaction (1)), whereas on the positive electrode, iron(II) is oxidized to iron(III) (described in reaction (2)). The solid elementary iron(0) remains at the negative electrode (plating reaction), while on the other side the iron(III) is still dissolved in the aqueous solution as iron(lll)-chloride. These reactions are reversed during the discharging process. Per mol of iron involved in each half-cell reaction on the negative side, there have to be two mol of iron involved in the half-cell reaction on the positive side.

A parasitic hydrogen (ion) evolution reaction (*HER*) may take place during the charging process of the all-iron redox flow battery system. As a result of the availability of free electrons on the electrode surface, reaction (3)

(3) 2H⁺ +2e⁻ ←→ H₂

takes place at the negative electrode (directly coupled electrically to the charging half reaction (2)) and hydrogen in gaseous state evolves at the negative electrode.

During operation and due to the selectivity of the separator/membrane 13 not reaching 100%, some Fe³⁺ may also crossover from the positive half-cell 12 into the negative half-cell 11 through the membrane/separator 13.

The side half reaction (3) coupled to charging reaction (2), can lead to an imbalance of the electrolyte. The charge "wasted" on the HER side reaction is not used to reduce Fe²⁺ to Fe⁰ and thus the whole system accumulates more Fe³⁺ species in the positive electrolyte than corresponding Fe⁰ on the negative electrode (since the H₂ evolution is not reversed during the discharging process). Over time this leads to a decrease in the coulombic storage capacity of the all-iron redox flow battery system.

During normal operation of the battery, some metallic (solid) iron, Fe(0) formed during the charging process can get dislodged from the electrode in the negative half-cell, and clog or constrict the internal flow channels within the ISB cell 10 or the stack of ISB cells 10. As well, some Fe(0) formed during the charging process may remain in the stack due to uneven plating through the stack as a result of shunt currents (e.g., parasitic currents through the electrolyte channels).

In order to manage the flow of the positive and negative electrolyte, in the ISB device 100 an arrangement of connecting lines and valves 71-75 as well as pumps 21, 31 are provided. Further, processing circuitry 60 operates the ISB device 100 by operating the valves and pumps in order to direct the flow. In addition, pressure measuring devices 14, 15 are provided at the entrance side and the exit side of the negative half-cell, respectively.

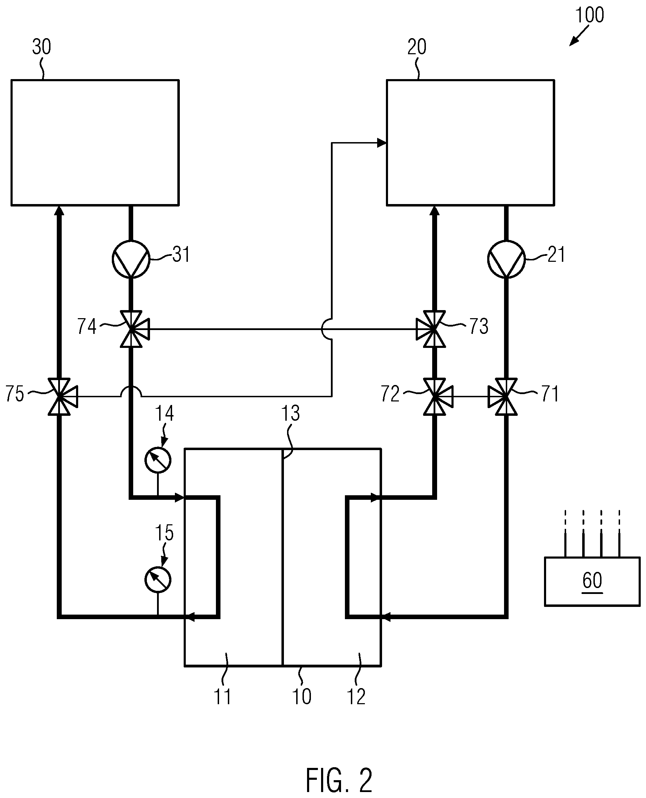

Fig. 2 illustrates the flow of the electrolytes during a charging or discharging operation of the ISB device 100.

Whether the ISB device 100 is charged or discharged depends on a voltage and current in an external circuit connected to the electrodes, which determines the direction of the reactions (1) and (2). This external circuit may be related to a source of electrical energy during charging and a sink of electrical energy (consumer load) during discharge. The connection or switching of the external circuit may be done by the processing circuitry 60.

The flow of the electrolytes is shown in bold lines. The positive electrolyte is pumped from the positive tank 20 by pump 21 through the positive half-cell 12 of the ISB cell 10 and back to the positive tank 20. The valves 71, 72 and 73 are set accordingly by the processing circuitry 60. The negative electrolyte is pumped from the negative tank 30 by pump 31 through the negative half-cell 11 and back to the negative tank 30. The valves 44 and 45 are set accordingly by the processing circuitry 60.

The processing circuitry monitors a pressure drop between the entrance side and the exit side of the negative half-cell using the pressure measuring devices 14, 15. A large pressure drop across the ISB cell 10 may be an indication of clogged flow channels within the ISB cell 10.

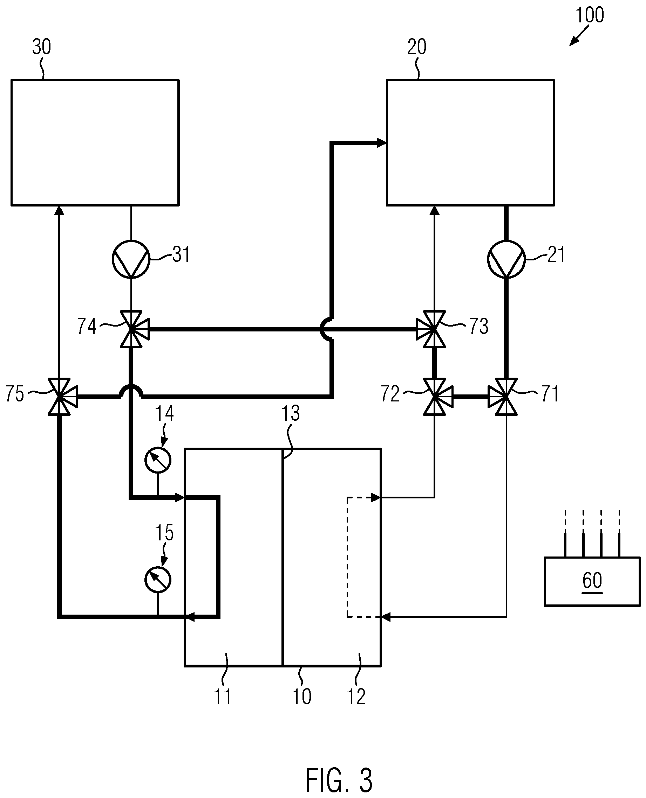

Fig. 3 illustrates the flow of the electrolytes during an iron residue removal operation mode of the IBS device 100 to remove metallic solid iron residue from the ISB cell or the stack of ISB cells.

If the processing circuitry 60 that is connected to the pressure measuring devices 14, 15 determines that the pressure drop is outside of a predefined range of values (a range that is normal during the charging or discharging operation), the processing circuitry 60 may first determine whether or not a state of charge of the ISB device 100 is below a predefined threshold value (to avoid losing already a significant amount of stored electrical energy).

If the determined state of charge is below the threshold, the processing circuitry 60 set the pumps such that pump 21 for the positive electrolyte is operating and the pump 31 for the negative electrolyte is stopped. Further, the processing circuitry 60 set the valves 71-75 such that the positive electrolyte from the positive tank 20 bypasses the positive half-cell 12, flows through the negative half-cell 11 and back to the positive tank 20.

Accordingly, the iron residue removal operation mode comprises circulating positive electrolyte from the positive tank 20 through the negative half-cell 11 of each ISB cell 10 or stack of ISB cells 10 and back to the positive tank 20.

By circulating positive electrolyte through the negative half-cell 11, metallic iron can be removed from locations where such residue clogs or constrict internal flow channels within the ISB cell 10 or ISB cell stack 10. Such metallic (solid) iron may have been dislodged from the negative electrode plated with Fe(0).

The reactions to remove metallic solid iron, *Fe⁰*, residue from the ISB cell 10 or the stack of ISB cells 10 include at least one of *Fe³⁺ + Fe*⁰ → *2*F*e*²⁺ and 2*H*⁺ + *Fe*⁰ → *Fe*²⁺ + *H*₂.

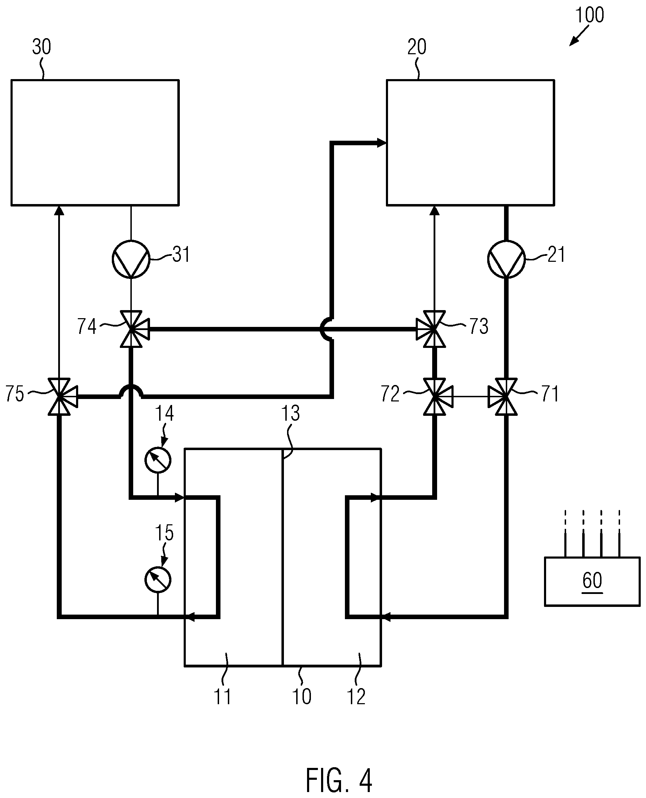

Fig. 4 illustrates the flow of the electrolytes during another embodiment of the iron residue removal operation mode for the IBS device 100.

In this embodiment of the method of operation the ISB device, the flow of the positive electrolyte is directed such that it also flows through the positive half-cell 12. Otherwise, the method is the same as that described in the embodiment of Fig. 3.

In particular, according to the embodiment of Fig. 4, the valves 71, 72 and 73 are set by the processing circuitry 60 such that the flow of positive electrolyte from the positive tank 20 first passes through the positive half-cell 12 and then through the negative half-cell 11 (i.e., the flow does not bypass the positive half-cell 12). This has the advantage that also solid iron residue in the positive half-cell, in particular in flow channels thereof, can also be removed.

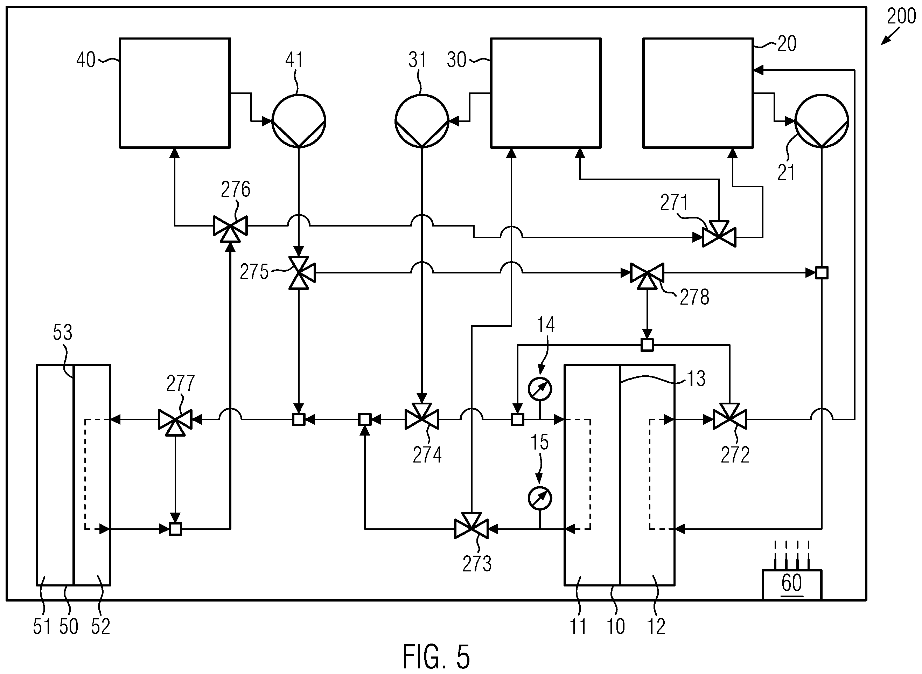

Fig. 5 shows a general layout of another iron salt battery device 200.

In addition to the layout of Fig. 1, the ISB device 200 further comprises an acidification tank, AT, 40 containing acidic electrolyte and an acidification cell, AC, 50. A pump 41 is provided for pumping the acidic electrolyte. Moreover, the piping and the arrangement of the valves 271-278 is different from that of Fig. 1. Otherwise the components corresponding to each other are labeled with the same reference sign.

The acidification cell 50, AC, comprises a positive 52 and a negative AC half-cell 51, and the AC 50 is configured for lowering pH of the acidic electrolyte. The AC 50 can be used to transfer protons from the negative AC half-cell 51 to acidic electrolyte solution passing through the positive AC half-cell 52. Specifically, hydrogen may be supplied to the negative half cell 51 of the AC 50 from hydrogen generated in the negative ISB half cell 11, or may come from an alternate hydrogen source (not shown), for example but not limited to, a hydrogen generator. Thus, the pH of the acidic electrolyte solution in the AT 40 can be lowered. This low pH electrolyte solution in AT 40 can then, for example, be used to rebalance the state of charge in the positive and negative electrolyte tanks 20, 30. To this end, for example, positive electrolyte may be transferred to the AT. According to the invention, the acidic electrolyte or the acidic electrolyte further containing positive electrolyte is also used to remove iron residue from the ISB cells.

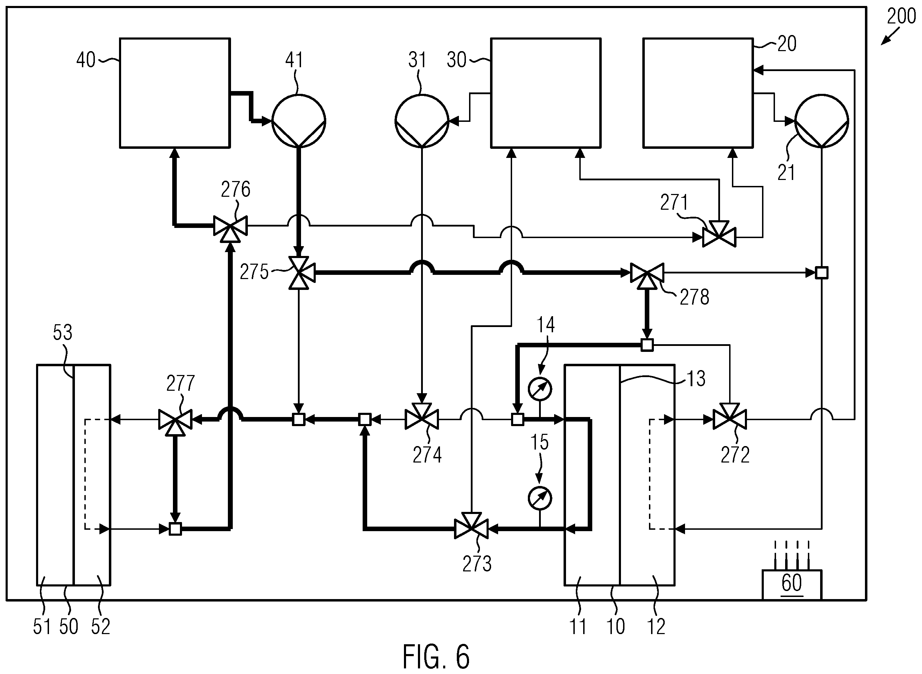

Fig. 6 illustrates an iron residue removal mode of operation of the ISB device shown in Fig. 5.

When it has been determined by the processing circuitry 60 that the pressure drop as measured by the pressure measuring devices 14, 15 is outside of a predefined range and/or the number n of complete charging/discharging cycles (since the last execution of the iron residue removal operation mode) is above a preset threshold number N and/or the coulombic efficiency of a present cycle has dropped by more than a predefined percentage below the coulombic efficiency of a previous cycle, the iron residue removal operation mode is started (using the processing circuitry 60) by operating the pumps 21, 31, 41 and valves 271-278 such that the step of circulating acidic electrolyte from the AT 40 through the negative half-cell 11 of each ISB cell 10 or stack of ISB cells 10 and back to the AT 40 is performed. The acidic electrolyte removes metallic iron by the reaction:

2*H*⁺ *+ Fe*⁰ → *Fe*²⁺ + *H₂*

If the acidic electrolyte also includes positive electrolyte (previously transferred from the positive tank 20 to the AT 40), in addition, the following reaction applies:

*Fe³⁺ + Fe*⁰ → 2*Fe*²⁺

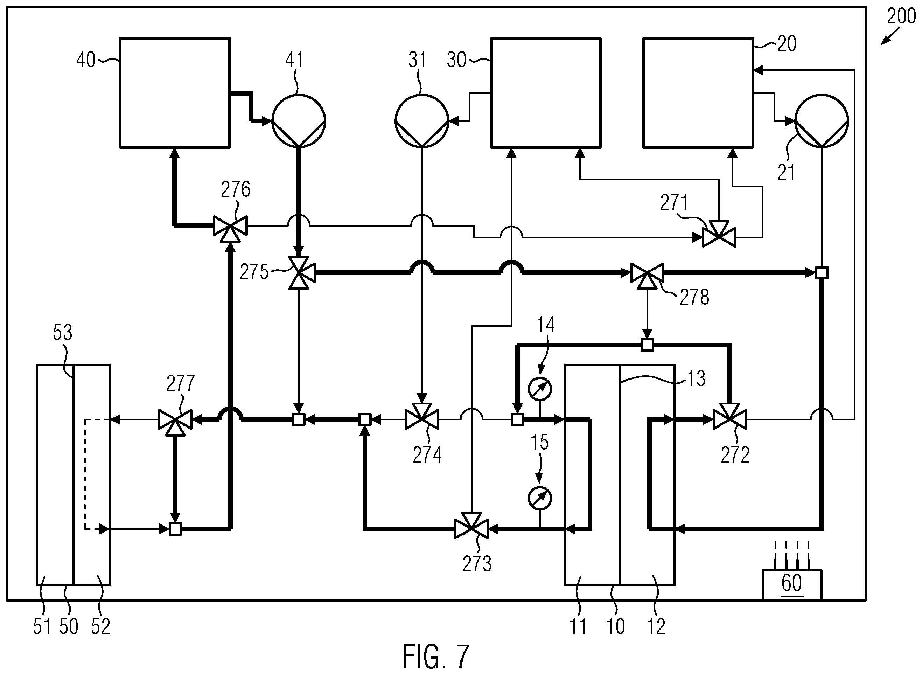

Fig. 7 illustrates another iron residue removal mode of operation of the ISB device shown in Fig. 5.

The operation of the ISB device 200 is similar to that as described for Fig. 6, with the exception that the valves 271-278 are set such that the flow of acidic electrolyte (optionally including positive electrolyte) is directed first through the positive half cell(s) 12 and then through the negative half cell(s) 11. This also removes iron residue in the positive cell(s), if present at all.

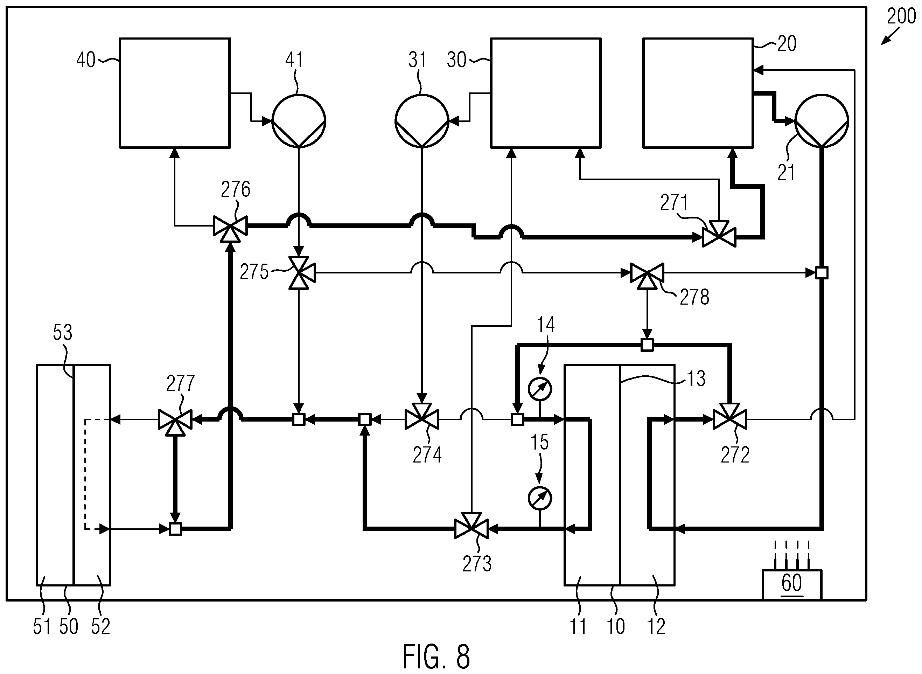

Fig. 8 illustrates still another iron residue removal mode of operation of the ISB shown in Fig. 5.

The operation of the ISB device 200 in this case corresponds to that described with reference to Fig. 4. Positive electrolyte form the positive tank 20 flows through the positive half cell(s) 12 and then through the negative half cell(s) 11. The reaction on which iron residue removal is based is in this case

*Fe³⁺ + Fe*⁰ → 2*Fe*²⁺

In an alternative of Fig. 8 (not shown), the arrangement and operation of valves may be such the positive electrolyte may only flow through the negative half cells(s) and bypass the positive half cell(s). This corresponds to the mode of operation as shown in Fig. 3. In any case, cleaning the negative half cell(s) having the electrodes with plated iron that may dislodge, is the most important.

Summarized: During normal operation of the battery, some metallic iron formed during the charging process can get dislodged from the electrode, and clog or constrict the internal flow channels within the stack. Additionally, during the charging process, plating may occur unevenly through the stack as a result of shunt currents, leading to residual plated iron in some negative electrodes after discharge. If this is not removed periodically it can result in blocked cells and a failed stack. This process may be triggered by a change in pressure drop through the stack, or it may be triggered by a certain number of cycles between cleanings, or by a cumulative measurement of coulombic efficiency.

In order to prevent such a blockage, the "removal of iron residue protocol" is enacted. The protocol preferably takes place only on a discharged battery, as the removal of iron metal in a charged state would mean the loss of the stored energy. The protocol may use positive electrolyte, which contains Fe(III) despite being discharged. This is a constant in the system and a result of having less than 100% coulombic efficiency: for every side reaction on the negative side, an Fe(III) ion is accumulated in the positive electrolyte, in excess.

This "removal of iron residue protocol" may also use charged positive electrolyte which was transferred to the acidification tank prior to discharge, containing a higher concentration of Fe(III). This "removal of iron residue protocol" may also use the acidic electrolyte in the acidification tank as such. The Fe(III) containing electrolyte (from either the acidification tank or the positive electrolyte tank) may be allowed to flow through both sides of the stack, etching and dissolving residual metallic iron, but at least through the negative side of the stack.

The embodiments are only exemplary and the full scope of the present invention is defined by the claims.

## Claims

1. Method for operating an iron salt battery, ISB, device, the ISB device comprising an ISB cell or a stack of ISB cells, a positive tank containing a positive electrolyte, and a negative tank containing negative electrolyte, wherein each ISB cell comprises a positive and a negative half-cell, the method comprising:
determining a pressure drop across the ISB cell or stack of ISB cells and/or determining a number n of complete charging/discharging cycles of the ISB device performed since start of counting the number of cycles and/or determining a coulombic efficiency over a plurality of cycles; and
if it is determined that the pressure drop is outside of a predefined range and/or the number n of complete charging/discharging cycles is above a preset threshold number N and/or the coulombic efficiency of a present cycle has dropped by more than a predefined percentage below the coulombic efficiency of a previous cycle, starting an iron residue removal operation mode to remove metallic solid iron residue from the ISB cell or the stack of ISB cells;
wherein the iron residue removal operation mode comprises circulating positive electrolyte from the positive tank through the negative half-cell of each ISB cell or stack of ISB cells and back to the positive tank.

2. Method for operating an iron salt battery, ISB, device, the ISB device comprising an ISB cell or a stack of ISB cells, a positive tank containing a positive electrolyte, a negative tank containing negative electrolyte, and an acidification tank containing an acidic electrolyte, the acidic electrolyte optionally comprising positive electrolyte previously transferred to the acidification tank, wherein each ISB cell comprises a positive and a negative half-cell, the method comprising:
determining a pressure drop across the ISB cell or stack of ISB cells and/or determining a number n of complete charging/discharging cycles of the ISB device performed since start of counting the number of cycles and/or determining a coulombic efficiency over a plurality of cycles; and
if it is determined that the pressure drop is outside of a predefined range and/or the number n of complete charging/discharging cycles is above a preset threshold number N and/or the coulombic efficiency of a present cycle has dropped by more than a predefined percentage below the coulombic efficiency of a previous cycle, starting an iron residue removal operation mode to remove metallic solid iron residue from the ISB cell or the stack of ISB cells;
wherein the iron residue removal operation mode comprises circulating acidic electrolyte from the acidification tank through the negative half-cell of each ISB cell or stack of ISB cells and back to the acidification tank; and
wherein the iron residue removal operation mode is only started if the ISB device is discharged below a predefined percentage of full charge, in particular below 10%, more particularly below 1.0%.

3. Method according to claim 1, wherein the iron residue removal operation mode is only started if the ISB device is discharged below a predefined percentage of full charge, in particular below 10%, more particularly below 1.0%.

4. Method according to claim 2 or 3, wherein the step of determining if the ISB device is discharged below a predefined percentage of charge includes measuring an Fe(III) concentration in the positive tank.

5. Method according to any one of claims 1 to 4, whereby the circulating electrolyte etches and dissolves residual metallic iron from internal flow channels of the ISB cell or of the stack of ISB cells.

6. Method according to any one of claims 1 to 5, wherein the circulating step comprises circulating positive electrolyte from the positive tank through the positive and negative half-cells of each ISB cell or stack of ISB cells and back to the positive tank, in particular first through the positive and then through the negative half-cell(s).

7. Method according to any one of claims 2 to 5, wherein the circulating step comprises circulating acidic electrolyte from the acidification tank through the positive and negative half-cells of each ISB cell or stack of ISB cells and back to the acidification tank, in particular first through the positive and then through the negative half-cell(s).

8. Method according to any one of claims 1 to 7, further comprising the step of stopping any flow from the negative tank to the negative half cell(s) before starting the iron residue removal operation mode.

9. Method according to any one of claims 1 to 8, wherein the step of determining a pressure drop across the ISB cell or stack is performed by using at least two pressure measuring devices, one at a flow entrance side of the negative half cell(s) and another one at a flow exit side of the negative half cell(s) and/or one at a flow entrance side of the positive half cell(s) and another one at a flow exit side of the positive half cell(s).

10. Method according to any one of claims 1 to 9, wherein the ISB device further comprises processing circuitry that performs the determining steps and operates the ISB device to perform the circulating step.

11. Method according to claim 10, wherein operating the ISB device to perform the circulating step comprises closing at least one valve for the negative electrolyte, opening at least one valve for the positive or acidic electrolyte and pumping the positive or acidic electrolyte using at least one pump.

12. Method according to any one of claims 1 to 11, wherein reactions to remove metallic solid iron, *Fe⁰*, residue from the ISB cell or the stack of ISB cells include at least one of:
*Fe³⁺ + Fe*⁰ → 2*Fe*²⁺
2*H*⁺ *+ Fe*⁰ → *Fe*²⁺ + *H₂*

13. Method according to any one of claims 1 to 12, comprising the further steps of:
determining if the pressure drop across the ISB cell or stack of ISB cells has returned to be within the predefined range; and
if it is determined that the pressure drop has returned to be within the predefined range, stopping the circulation of positive or acidic electrolyte.

14. Method according to claim 13, further comprising, after stopping the circulation of positive or acidic electrolyte , the step of starting to perform an operation mode of charging the ISB device.

15. Method according to any one of claims 1 to 14, wherein the positive electrolyte comprises positive iron dichloride and iron trichloride electrolyte, and the negative electrolyte comprises negative iron dichloride electrolyte.

## Patentansprüche

1. Verfahren zum Betreiben einer Eisensalz-Batterie-, ISB-, Vorrichtung, wobei die ISB-Vorrichtung eine ISB-Zelle oder einen Stapel von ISB-Zellen, einen positiven Behälter, der einen positiven Elektrolyten enthält, und einen negativen Behälter, der einen negativen Elektrolyten enthält, aufweist, wobei jede ISB-Zelle eine positive und eine negative Halbzelle aufweist, und wobei das Verfahren umfasst:
Bestimmen eines Druckabfalls an der ISB-Zelle oder dem Stapel von ISB-Zellen und/oder Bestimmen einer Anzahl n vollständiger Lade-/Entladezyklen der ISB-Vorrichtung, die seit Beginn der Zählung der Anzahl von Zyklen durchgeführt wurden, und/oder Bestimmen einer coulombischen Effizienz über mehrere Zyklen hinweg; und
wenn bestimmt wird, dass der Druckabfall außerhalb eines vordefinierten Bereichs liegt und/oder die Anzahl n der vollständigen Lade-/Entladezyklen über einer voreingestellten Schwellenzahl N liegt und/oder die coulombische Effizienz eines aktuellen Zyklus um mehr als einen vordefinierten Prozentsatz unter die coulombische Effizienz eines vorherigen Zyklus gefallen ist, Starten eines Betriebsmodus zur Entfernung von Eisenrückständen, um metallische feste Eisenrückstände aus der ISB-Zelle oder dem Stapel von ISB-Zellen zu entfernen;
wobei der Betriebsmodus zur Entfernung von Eisenrückständen Zirkulieren von positivem Elektrolyt aus dem positiven Behälter durch die negative Halbzelle jeder ISB-Zelle oder jedes Stapels von ISB-Zellen und zurück zum positiven Behälter beinhaltet.

2. Verfahren zum Betreiben einer Eisensalz-Batterie-, ISB-, Vorrichtung, wobei die ISB-Vorrichtung eine ISB-Zelle oder einen Stapel von ISB-Zellen, einen positiven Behälter, der einen positiven Elektrolyten enthält, einen negativen Behälter, der einen negativen Elektrolyten enthält, und einen Säurebehälter aufweist, der einen sauren Elektrolyten enthält, wobei der saure Elektrolyt optional einen zuvor in den Säurenehälter überführten positiven Elektrolyten enthält, wobei jede ISB-Zelle eine positive und eine negative Halbzelle aufweist, und wobei das Verfahren umfasst:
Bestimmen eines Druckabfalls an der ISB-Zelle oder dem Stapel von ISB-Zellen und/oder Bestimmen einer Anzahl n vollständiger Lade-/Entladezyklen der ISB-Vorrichtung, die seit Beginn der Zählung der Anzahl von Zyklen durchgeführt wurden, und/oder Bestimmen einer coulombischen Effizienz über mehrere Zyklen hinweg; und
wenn bestimmt wird, dass der Druckabfall außerhalb eines vordefinierten Bereichs liegt und/oder die Anzahl n vollständiger Lade-/Entladezyklen über einer voreingestellten Schwellenzahl N liegt und/oder die coulombische Effizienz eines aktuellen Zyklus um mehr als einen vordefinierten Prozentsatz unter die coulombische Effizienz eines vorherigen Zyklus gefallen ist, Starten eines Betriebsmodus zur Entfernung von Eisenrückständen, um metallische feste Eisenrückstände aus der ISB-Zelle oder dem Stapel von ISB-Zellen zu entfernen;
wobei der Betriebsmodus zur Entfernung von Eisenrückständen Zirkulieren von saurem Elektrolyt aus dem Säurebehälter durch die negative Halbzelle jeder ISB-Zelle oder jedes Stapels von ISB-Zellen und zurück zum Säurebehälter beinhaltet; und
wobei der Betriebsmodus zur Entfernung von Eisenrückständen nur gestartet wird, wenn die ISB-Vorrichtung unter einen vordefinierten Prozentsatz der Vollladung, insbesondere unter 10 %, insbesondere unter 1,0 %, entladen ist.

3. Verfahren nach Anspruch 1, wobei der Betriebsmodus zur Entfernung von Eisenrückständen nur gestartet wird, wenn die ISB-Vorrichtung unter einen vordefinierten Prozentsatz der vollen Ladung, insbesondere unter 10 %, und insbesondere unter 1,0 %, entladen ist.

4. Verfahren nach Anspruch 2 oder 3, wobei der Schritt des Bestimmens, ob die ISB-Vorrichtung unter einen vordefinierten Prozentsatz der Ladung entladen ist, das Messen einer Fe(III)-Konzentration in dem positiven Behälter umfasst.

5. Verfahren nach einem der Ansprüche 1 bis 4, wobei der zirkulierende Elektrolyt restliches metallisches Eisen aus den internen Strömungskanälen der ISB-Zelle oder des Stapels von ISB-Zellen ätzt und auflöst.

6. Verfahren nach einem der Ansprüche 1 bis 5, wobei der Zirkulationsschritt Zirkulieren von positivem Elektrolyt aus dem positiven Behälter durch die positiven und negativen Halbzellen jeder ISB-Zelle oder jedes Stapels von ISB-Zellen und zurück zum positiven Behälter, insbesondere zuerst durch die positive und dann durch die negative(n) Halbzelle(n), beinhaltet.

7. Verfahren nach einem der Ansprüche 2 bis 5, wobei der Zirkulationsschritt Zirkulieren von saurem Elektrolyt aus dem Säurebehälter durch die positiven und negativen Halbzellen jeder ISB-Zelle oder jedes Stapels von ISB-Zellen und zurück zum Säurebehälter, insbesondere zuerst durch die positive und dann durch die negative(n) Halbzelle(n), beinhaltet.

8. Verfahren nach einem der Ansprüche 1 bis 7, das ferner den Schritt umfasst: Beenden jeglichen Strömens aus dem negativen Behälter zu der/den negativen Halbzelle(n), bevor der Modus zum Entfernen von Eisenrückständen gestartet wird.

9. Verfahren nach einem der Ansprüche 1 bis 8, wobei der Schritt des Bestimmens eines Druckabfalls an der ISB-Zelle oder dem ISB-Stapel unter Verwendung von mindestens zwei Druckmessvorrichtungen durchgeführt wird, wobei eine an der Strömungseintrittsseite der negativen Halbzelle(n) und eine weitere an der Strömungsaustrittsseite der negativen Halbzelle(n) und/oder eine an der Strömungseintrittsseite der positiven Halbzelle(n) und eine weitere an der Strömungsaustrittsseite der positiven Halbzelle(n) angeordnet ist.

10. Verfahren nach einem der Ansprüche 1 bis 9, wobei die ISB-Vorrichtung ferner eine Verarbeitungsschaltung aufweist, die die Bestimmungsschritte durchführt und die ISB-Vorrichtung derart betreibt, dass der Zirkulationsschritt durchgeführt wird.

11. Verfahren nach Anspruch 10, wobei das Betreiben der ISB-Vorrichtung zur Durchführung des Zirkulationsschritts Schließen mindestens eines Ventils für den negativen Elektrolyten, Öffnen mindestens eines Ventils für den positiven oder sauren Elektrolyten und Pumpen des positiven oder sauren Elektrolyten unter Verwendung mindestens einer Pumpe beinhaltet.

12. Verfahren nach einem der Ansprüche 1 bis 11, wobei Reaktionen zum Entfernen von metallischen festen Eisen-, Fe⁰-, Rückständen aus der ISB-Zelle oder dem Stapel von ISB-Zellen mindestens eine der folgenden Reaktionen umfassen:
*Fe³⁺* + *Fe⁰ -> 2Fe*²⁺
*2H* + Fe⁰ -> Fe*^{*2*+} *+ H₂.*

13. Verfahren nach einem der Ansprüche 1 bis 12, 'das die weiteren Schritte umfasst:
Bestimmen, ob der Druckabfall an der ISB-Zelle oder dem Stapel von ISB-Zellen wieder in den vordefinierten Bereich zurückgekehrt ist; und
wenn bestimmt wird, dass der Druckabfall wieder in den vordefinierten Bereich zurückgekehrt ist, Beenden der Zirkulation des positiven oder sauren Elektrolyten.

14. Verfahren nach Anspruch 13, das nach dem Beenden der Zirkulation des positiven oder sauren Elektrolyten den Schritt des Startens eines Betriebsmodus zum Laden der ISB-Vorrichtung beinhaltet.

15. Verfahren nach einem der Ansprüche 1 bis 14, wobei der positive Elektrolyt einen Elektrolyten mit positivem Eisen-Dichlorid und Eisen-Trichlorid aufweist und der negative Elektrolyt einen Elektrolyten mit negativem Eisen-Dichlorid aufweist.

## Revendications

1. Procédé de fonctionnement d'un dispositif de batterie fer sodium, ISB (Iron Salt Battery), le dispositif ISB comprenant une cellule ISB ou une pile de cellules ISB, un réservoir positif contenant un électrolyte positif, et un réservoir négatif contenant un électrolyte négatif, dans lequel chaque cellule ISB comprend une demi-cellule positive et négative, le procédé comprenant :
une détermination d'une chute de pression sur l'ensemble de la cellule ISB ou la pile de cellules ISB et/ou une détermination d'un nombre n de cycles de charge/décharge complets du dispositif ISB exécutés depuis un début de comptage du nombre de cycles et/ou une détermination d'un rendement coulombien sur une pluralité de cycles ; et
s'il est déterminé que la chute de pression s'inscrit hors d'une plage prédéfinie et/ou le nombre n de cycles de charge/décharge complets est supérieur à un nombre de seuil prédéfini N et/ou le rendement coulombien d'un cycle présent a chuté de plus d'un pourcentage prédéfini au-dessous du rendement coulombien d'un cycle précédent, un démarrage d'un mode de fonctionnement d'élimination de résidu de fer pour éliminer un résidu de fer solide métallique de la cellule ISB ou la pile de cellules ISB ;
dans lequel le mode de fonctionnement d'élimination de résidu de fer comprend une circulation d'un électrolyte positif depuis le réservoir positif à travers la demi-cellule négative de chaque cellule ISB ou pile de cellules ISB et retour au réservoir positif.

2. Procédé de fonctionnement d'un dispositif de batterie fer sodium, ISB (Iron Salt Battery), le dispositif ISB comprenant une cellule ISB ou une pile de cellules ISB, un réservoir positif contenant un électrolyte positif, un réservoir négatif contenant un électrolyte négatif, et un réservoir d'acidification contenant un électrolyte acide, l'électrolyte acide comprenant facultativement un électrolyte positif précédemment transféré au réservoir d'acidification, dans lequel chaque cellule ISB comprend une demi-cellule positive et négative, le procédé comprenant :
une détermination d'une chute de pression sur l'ensemble de la cellule ISB ou la pile de cellules ISB et/ou une détermination d'un nombre n de cycles de charge/décharge complets du dispositif ISB exécutés depuis un début de comptage du nombre de cycles et/ou une détermination d'un rendement coulombien sur une pluralité de cycles ; et
s'il est déterminé que la chute de pression s'inscrit hors d'une plage prédéfinie et/ou le nombre n de cycles de charge/décharge complets est supérieur à un nombre de seuil prédéfini N et/ou le rendement coulombien d'un cycle présent a chuté de plus d'un pourcentage prédéfini au-dessous du rendement coulombien d'un cycle précédent, un démarrage d'un mode de fonctionnement d'élimination de résidu de fer pour éliminer un résidu de fer solide métallique de la cellule ISB ou la pile de cellules ISB ;
dans lequel le mode de fonctionnement d'élimination de résidu de fer comprend une circulation d'un électrolyte acide depuis le réservoir d'acidification à travers la demi-cellule négative de chaque cellule ISB ou pile de cellules ISB et retour au réservoir d'acidification ; et
dans lequel le mode de fonctionnement d'élimination de résidu de fer est uniquement démarré si le dispositif ISB est déchargé au-dessous d'un pourcentage prédéfini de charge complète, en particulier au-dessous de 10 %, plus particulièrement au-dessous de 1,0 %.

3. Procédé selon la revendication 1, dans lequel le mode de fonctionnement d'élimination de résidu de fer est uniquement démarré si le dispositif ISB est déchargé au-dessous d'un pourcentage prédéfini de charge complète, en particulier au-dessous de 10 %, plus particulièrement au-dessous de 1,0 %.

4. Procédé selon la revendication 2 ou 3, dans lequel l'étape de détermination que le dispositif ISB est déchargé au-dessous d'un pourcentage prédéfini de charge inclut un mesure d'une concentration de Fe(III) dans le réservoir positif.

5. Procédé selon l'une quelconque des revendications 1 à 4, par lequel l'électrolyte en circulation érode et dissout un fer métallique résiduel issu de canaux d'écoulement interne de la cellule ISB ou de la pile de cellules ISB.

6. Procédé selon l'une quelconque des revendications 1 à 5, dans lequel l'étape de circulation comprend une circulation d'électrolyte positif depuis le réservoir positif à travers les demi-cellules positives et négatives de chaque cellule ISB ou pile de cellules ISB et retour au réservoir positif, en particulier d'abord à travers la ou les demi-cellules positives puis négatives.

7. Procédé selon l'une quelconque des revendications 2 à 5, dans lequel l'étape de circulation comprend une circulation d'électrolyte acide depuis le réservoir d'acidification à travers les demi-cellules positives et négatives de chaque cellule ISB ou pile de cellules ISB et retour au réservoir d'acidification, en particulier d'abord à travers la ou les demi-cellules positives puis négatives.

8. Procédé selon l'une quelconque des revendications 1 à 7, comprenant en outre l'étape d'arrêt de tout écoulement depuis le réservoir négatif vers la ou les demi-cellules négatives avant un démarrage du mode de fonctionnement d'élimination de résidu de fer.

9. Procédé selon l'une quelconque des revendications 1 à 8, dans lequel l'étape de détermination d'une chute de pression sur l'ensemble de la cellule ISB ou la pile est exécutée en utilisant au moins deux dispositifs de mesure de pression, un au niveau d'un côté d'entrée d'écoulement de la ou des demi-cellules négatives et un autre au niveau d'un côté de sortie d'écoulement de la ou des demi-cellules négatives, et/ou au niveau d'un côté d'entrée d'écoulement de la ou des demi-cellules positives et un autre au niveau d'un côté de sortie d'écoulement de la ou des demi-cellules positives.

10. Procédé selon l'une quelconque des revendications 1 à 9, dans lequel le dispositif ISB comprend en outre un circuit de traitement qui exécute les étapes de détermination et fait fonctionner le dispositif ISB pour exécuter l'étape de circulation.

11. Procédé selon la revendication 10, dans lequel un fonctionnement du dispositif ISB pour exécuter l'étape de circulation comprend une fermeture d'au moins un clapet pour l'électrolyte négatif, une ouverture d'au moins un clapet pour l'électrolyte positif ou acide, et un pompage de l'électrolyte positif ou acide au moyen d'au moins une pompe.

12. Procédé selon l'une quelconque des revendications 1 à 11, dans lequel des réactions pour éliminer le résidu de fer solide métallique, *Fe⁰*, de la cellule ISB ou la pile de cellules ISB incluent au moins un de :
*Fe³⁺* + *Fe⁰ -> 2Fe*²⁺
*2H*⁺ + *Fe⁰* -> *Fe²⁺* + *H₂*

13. Procédé selon l'une quelconque des revendications 1 à 12, comprenant en outre les étapes de :
détermination que la chute de pression sur l'ensemble de la cellule ISB ou la pile de cellules ISB est revenue s'inscrire dans la plage prédéfinie ; et
s'il est déterminé que la chute de pression est revenue s'inscrire dans la plage prédéterminée, arrêt de la circulation d'électrolyte positif ou acide.

14. Procédé selon la revendication 13, comprenant en outre, après un arrêt de la circulation d'électrolyte positif ou acide, l'étape de démarrage d'exécution d'un mode de fonctionnement de charge du dispositif ISB.

15. Procédé selon l'une quelconque des revendications 1 à 14, dans lequel l'électrolyte positif comprend de l'électrolyte de dichlorure de fer et trichlorure de fer positif, et l'électrolyte négatif comprend de l'électrolyte de dichlorure de fer négatif.
